(19) Europäisches Patentamt / European Patent Office / Office européen des brevets

(11) **EP 2 014 711 B1**

(12) **EUROPEAN PATENT SPECIFICATION**

(45) Date of publication and mention
of the grant of the patent:
**17.04.2013 Bulletin 2013/16**

(51) Int Cl.:
***C08L 21/00*** *(2006.01)*   ***C08L 25/00*** *(2006.01)*
***C08K 3/36*** *(2006.01)*   ***B60C 1/00*** *(2006.01)*

(21) Application number: **08010619.8**

(22) Date of filing: **11.06.2008**

(54) **Rubber composition for tire, and winter tire using the same**

Gummizusammensetzung für einen Reifen und Winterreifen

Composition de caoutchouc pour pneu, et pneu d'hiver l'utilisant

(84) Designated Contracting States:
**DE FR**

(30) Priority: **22.06.2007 JP 2007165408**

(43) Date of publication of application:
**14.01.2009 Bulletin 2009/03**

(73) Proprietor: **Sumitomo Rubber Industries, Ltd.
Hyogo-ken (JP)**

(72) Inventors:
• **Nishioka, Kazuyuki
c/o SRI Research & Development Ltd.
Hyogo 651-0071 (JP)**
• **Kishimoto, Hiroyuki
c/o SRI Research & Development Ltd.
Hyogo 651-0071 (JP)**

• **Hochi, Kazuo
c/o SRI Research & Development Ltd.
Hyogo 651-0071 (JP)**
• **Terakawa, Katsumi
c/o SRI Research & Development Ltd.
Hyogo 651-0071 (JP)**

(74) Representative: **Manitz, Finsterwald & Partner
GbR
Postfach 31 02 20
80102 München (DE)**

(56) References cited:
**EP-A- 1 535 959   EP-A- 1 647 572
EP-A- 1 770 122   KR-A- 20050 001 112**

Remarks:
The file contains technical information submitted after the application was filed and not included in this specification

**Description**

This nonprovisional application is based on Japanese Patent Application No. 2007-165408 filed with the Japan Patent Office on June 22, 2007.

BACKGROUND OF THE INVENTION

Field of the Invention

The present invention relates to a rubber composition for a tire which improves grip performance on a frozen road surface and a snow-fallen road surface while maintaining properties such as abrasion resistance, particularly a winter tire using the rubber composition for a tire.

Description of the Background Art

Since winter tires are used in running on a frozen road surface and a snow-fallen road surface (hereinafter, referred to as "ice snow road surface") in winter seasons, a high grip property on an ice snow road surface is required. In addition, with realization of a higher horsepower of passenger cars and development of express highways in recent years, abrasion resistance together with grip performance, representative of which is accelerating performance and braking performance on a paved road surface under high-speed running, is becoming an important required property.
Conventionally, there is the technique of improving traction property and braking property on an ice snow road surface while retaining low rolling resistance and wet grip property by incorporating a rapeseed oil as a softening agent into a rubber composition such as a styrene butadiene rubber. However, in the rubber composition containing a styrene butadiene rubber as a main component, since a tanδ peak temperature (Tg) becomes higher than -50°C, and a hardness at a low temperature is increased, sufficient grip property on an ice snow road surface is not obtained.
In addition, as a conventional technique, incorporation of a palm oil into a rubber component containing a natural rubber and a butadiene rubber can be mentioned. However, in a tire containing a rubber composition with a palm oil incorporated therein, a rubber hardness at a low temperature becomes high, and it is difficult to maintain grip performance on an ice snow road surface over a long period of time.
Particularly, Japanese Patent Laying-Open No. 2005-154696 discloses the technique of using a low-molecular styrene butadiene copolymer for improving grip property. Herein, since the low-molecular styrene butadiene copolymer has a double bond having a crosslinking property, a part of the low-molecular styrene butadiene copolymer forms a cross-link with a matrix rubber. For this reason, the low-molecular styrene butadiene copolymer is taken into a matrix, a sufficient hysteresis loss is not generated, and grip property can not be sufficiently improved in some cases. Further, when in order that the low-molecular styrene butadiene copolymer is not taken into a matrix by crosslinking, its double bond part is converted into a saturated bond by hydrogenation, compatibility with the matrix is remarkably deteriorated, and as a result, there is a tendency that breakage resistance property is reduced, and a component of the low-molecular styrene butadiene copolymer is bled.
In addition, Japanese Patent Laying-Open No. 2007-112994 discloses the technique of incorporating an aromatic vinyl polymer having a glass transition temperature of not higher than 10°C into a diene-based rubber in which a total content of a styrene butadiene rubber and a butadiene rubber is not less than 80% by mass, as a rubber composition for a tire excellent in grip performance and abrasion resistance.
KR 10 2005 000 1112 A discloses a rubber composition for a tire tread, which comprises i) a rubber component containing 15 to 30 parts by weight of natural rubber, 20 to 40 parts by weight of styrene butadiene rubber and 15 to 30 parts by weight of butadiene rubber, ii) 40 to 50 parts by weight of carbon black based on the rubber component and iii) 30 to 40 parts by weight of silica based on the rubber component.
EP 1 770 122 A2 discloses a rubber composition comprising a diene rubber and an aromatic vinyl polymer having a glass transition temperature of at most 10°C, wherein the total amount of styrene butadiene rubber and butadiene rubber in the rubber component is at least 80 % by weight.
EP 1 647 572 A1 relates to a rubber composition for a tire including 5 to 150 parts by weight of polystyrene having a weight average molecular weight of 500 to 10000 based on 100 parts by weight of a diene rubber, which consists for example of styrene butadiene rubber.
EP 1 535 959 A2 describes a rubber composition containing 5 to 200 parts by weight of a low molecular weight aromatic vinyl conjugated diene copolymer, such as styrene butadiene rubber, and 1 to 10 parts by weight of a softing agent and/or a plasticizer based on 100 parts by weight of a rubber component.

SUMMARY OF THE INVENTION

An object of the present invention is to provide a rubber composition for a tire which improves grip performance on an ice snow road surface while maintaining abrasion resistance performance, and a tire using the same.

The present invention provides a rubber composition for a tire containing 2 to 150 parts by mass of an aromatic vinyl polymer and 5 to 200 parts by mass of silica based on 100 parts by mass of a diene-based rubber component, wherein the diene-based rubber component contains not less than 20% by mass of a natural rubber and further, not less than 5% by mass of polybutadiene, wherein the aromatic vinyl polymer does not include a copolymer with a monomer other than an aromatic vinyl monomer, and wherein the weight average molecular weight of said aromatic vinyl polymer is 300 to 8000. It is desirable that the cis content of the polybutadiene is not less than 93%.

In addition, the weight average molecular weight of the aromatic vinyl polymer is preferably 300 to 2000. In addition, it is preferable that the monomer component of the aromatic vinyl polymer is styrene or $\alpha$-methylstyrene.

Further, the present invention also provides a winter tire using the rubber composition in a tread part.

According to the present invention, by incorporating a predetermined amount of silica and an aromatic vinyl polymer into a diene-based rubber component containing not less than 20% by mass of a natural rubber and further, not less than 5% by mass of polybutadiene, the aromatic vinyl polymer is uniformly dispersed in a matrix of the diene-based rubber, contributing to giving a friction force to the rubber composition, and grip performance at a low temperature, particularly grip performance upon running on an ice snow road surface can be considerably improved.

The foregoing and other objects, features, aspects and advantages of the present invention will become more apparent from the following detailed description of the present invention when taken in conjunction with the accompanying drawings.

BRIEF DESCRIPTION OF THE DRAWING

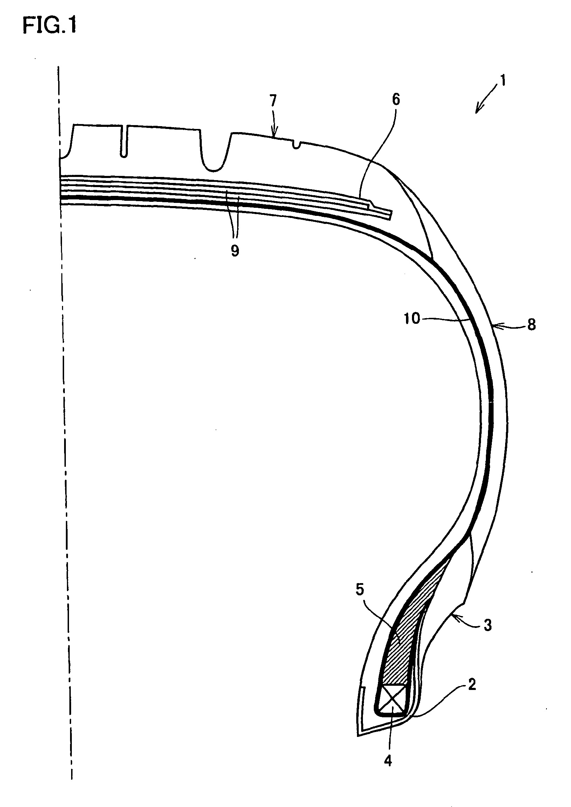

Fig. 1 shows a right half of a cross-sectional view of a pneumatic tire of the present invention.

**DESCRIPTION OF THE PREFERRED EMBODIMENTS**

The present invention provides a rubber composition for a tire containing 2 to 150 parts by mass of an aromatic vinyl polymer and 5 to 200 parts by mass of silica based on 100 parts by mass of a diene-based rubber component, wherein the diene-based rubber component contains not less than 20% by mass of a natural rubber and further, not less than 5% by mass of polybutadiene, wherein the aromatic vinyl polymer does not include a copolymer with a monomer other than an aromatic vinyl monomer, and wherein the weight average molecular weight of said aromatic vinyl polymer is 300 to 8000.

<Diene-based rubber component>

In the present invention, the diene-based rubber component contains not less than 20% by mass of a natural rubber. Since the natural rubber has a low glass transition point (Tg), even at a low temperature below the freezing point, fundamental properties as a rubber are maintained, and the grip property and abrasion resistance on an ice snow road surface are improved. The natural rubber is contained in the diene-based rubber component in an amount of preferably not less than 50% by mass, particularly preferably not less than 60% by mass.

In addition, in the present invention, the diene-based rubber component contains not less than 5% by mass, preferably not less than 10% by mass, particularly preferably not less than 20% by mass of polybutadiene. In addition, it is preferable that not more than 80% by mass, particularly not more than 50% by mass of polybutadiene is contained. Polybutadiene is excellent in solubility with an aromatic vinyl polymer, and is excellent in grip performance at a temperature below the freezing point. When a content of polybutadiene is less than 5% by mass, there is a tendency that a balance between the grip property and abrasion resistance on an ice snow road surface is reduced. On the other hand, when a content of polybutadiene is more than 80% by mass, there is a tendency that abrasion resistance and processability are reduced.

In the polybutadiene, a cis content is preferably not less than 93%, particularly preferably not less than 95%. When the cis content is less than 93%, there is a tendency that the grip property on an ice snow road surface is reduced and, at the same time, abrasion resistance is also reduced. Herein, the cis content is a value obtained by a measuring method of carbon-13 nuclear magnetic resonance spectroscopy (13C-NMR).

In the present invention, a mixing ratio (Wn/Wb) of an incorporation amount (Wn) of the natural rubber and an incorporation amount (Wb) of polybutadiene is preferably in a range of 20/80 to 95/5, particularly preferably in a range of 40/60 to 95/5. At the aforementioned mixing ratio, the grip property and abrasion resistance on an ice snow road surface can be simultaneously improved.

In the present invention, the diene-based rubber to be mixed with the natural rubber and the butadiene rubber is not particularly limited. Examples include a synthetic isoprene rubber (IR), a low cis-polybutadiene rubber (L-BR), a styrene butadiene rubber (SBR), an acryronitrile butadiene rubber (NBR), a chloroprene rubber (CR), and a butyl rubber (IIR), and these rubbers may be used alone, or by combining two or more kinds. Among them, it is preferable to mix SBR since grip performance and abrasion resistance are improved in a highly balanced manner.

A ratio of the diene-based rubber other than the natural rubber and the polybutadiene rubber to be mixed is preferably not more than 50% by mass, further more preferably not more than 30% by mass.

<Aromatic vinyl polymer>

By inclusion of the aromatic vinyl polymer, the rubber composition for a tire of the present invention can improve grip performance and abrasion resistance in a highly balanced manner.

The weight average molecular weight (Mw) of the aromatic vinyl polymer is not less than 300, preferably not less than 350. When the weight average molecular weight (Mw) is less than 300, improvement in the grip property on an ice snow road surface is not sufficient. The weight average molecular weight (Mw) is not more than 8000. When the weight average molecular weight (Mw) is more than 10000, there is a tendency that the grip property on an ice snow road surface is reduced, and reduction in the heat generation property becomes difficult.

A content of the aromatic vinyl polymer is preferably not less than 2 parts by mass, more preferably not less than 5 parts by mass based on 100 parts by mass of the diene-based rubber. When a content of the aromatic vinyl polymer is less than 2 parts by mass, particularly, there is a tendency that the effect of improving grip performance is hardly obtained. In addition, a content of the aromatic vinyl polymer is preferably not more than 150 parts by mass, more preferably not more than 100 parts of mass based on 100 parts by mass of the diene-based rubber. When a content of the aromatic vinyl polymer is more than 150 parts by mass, there is a tendency that abrasion resistance is reduced.

Examples of a monomer component of the aromatic vinyl polymer include aromatic vinyl monomers such as styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene.

As the aromatic vinyl monomer, styrene and $\alpha$-methylstyrene are preferable since they are economical, easily processed, and excellent in grip property.

The aromatic vinyl polymer used in the present invention refers to a (co)polymer obtained by homopolymerizing or copolymerizing one kind or two or more kinds of aromatic vinyl monomers, and does not include a copolymer with a monomer other than an aromatic vinyl monomer. A copolymer containing a monomer other than the aromatic vinyl monomer such as a conjugated diene monomer as a monomer component is inferior in solubility with a diene-based rubber. Further, at vulcanization, the aromatic vinyl polymer is co-crossliked with the diene-based rubber, the strength is reduced, and abrasion resistance is deteriorated, being not preferable.

<Silica>

In the present invention, not less than 5 parts by mass and not more than 200 parts by mass of silica is incorporated based on 100 parts by mass of the rubber component. When an incorporation amount of silica is less than 5 parts by mass, there is a tendency that abrasion resistance is reduced. When the amount of silica is more than 200 parts by mass, there is a tendency that processibility and a low fuel consumption property are reduced. Silica is incorporated in an amount of preferably not less than 10 parts by mass and not more than 150 parts by mass based on 100 parts by mass of the rubber component.

Silica which is generally used in a general-use rubber can be used, and examples include dry process silica, wet process silica, and colloidal silica which are used as a reinforcing material. Among them, wet process silica containing hydrous silicic acid as a main component is preferable. A nitrogen adsorption specific surface area ($N_2SA$) of silica is, for example, preferably in a range of 100 to 300 $m^2/g$, further preferably in a range of 120 to 280 $m^2/g$. When the nitrogen adsorption specific surface area (NaSA) of silica is less than 100 $m^2/g$, the reinforcing effect is not sufficient, and abrasion resistance of a tire can not be effectively improved. On the other hand, when the nitrogen adsorption specific surface area is more than 300 $m^2/g$, there is a tendency that dispersibility of silica is reduced, and heat generation of the rubber composition is increased. The nitrogen adsorption specific surface area ($N_2SA$) is measured by the BET method according to ASTM D3037-81.

When silica is incorporated into the rubber composition, a silane-based coupling agent, preferably a sulfur-containing silane coupling agent is usually incorporated in an amount of not less than 1% by mass and not more than 20% by mass based on a mass of silica. By incorporating the silane coupling agent in an amount of not less than 1% by mass, abrasion resistance of a tire is improved and a reduction in rolling resistance can be attained. On the other hand, when an incorporation amount of the silane coupling agent is not more than 20% by mass, the risk of occurrence of scorching in a step of kneading and extruding a rubber is small.

Examples of the sulfur-containing silane coupling agent include 3-trimethoxysilylpropyl-N, N-dimethylthiocarbamoyl-tetrasulfide, trimethoxysilylpropyl-mercaptobenzothiazole tetrasulfide, triethoxysilylpropyl-methacrylate-monosulfide, dimethoxymethylsilylpropyl-N, N-dimethylthiocarbamoyl-tetrasulfide, bis-[3-(triethoxysilyl)-propyl]tetrasulfide, 3-mercaptopropyltrimethoxysilane. As other silane-based coupling agents, vinyltrichlorosilane, vinyltris(2-methoxyethoxy) silane, γ -glycidoxypropyltrimethoxysilane, γ -methacryloxypropyltrimethoxysilane, γ-(2-aminoethyl)aminopropyltrimethoxysilane, γ-chloropropyltrimethoxysilane, γ -aminopropyltriethoxysilane.

In the present invention, other coupling agents, for example, an aluminate-based coupling agent, and a titanium-based coupling agent can be also used alone or by joint use with the silane-based coupling agent, depending on utility.

The rubber composition for a tire of the present invention can contain a reinforcing filler other than silica. As the reinforcing filler, reinforcing fillers which have been conventionally used in the rubber composition for a tire commonly, such as carbon black, calcium carbonate, magnesium carbonate, clay, alumina, and talc can be used without particular limitation, and carbon black is mainly preferable. These reinforcing fillers may be used alone, or by combining two or more kinds.

When carbon black is added as the filler, a content of carbon black is preferably not less than 5 parts by mass, more preferably not less than 10 parts by mass based on 100 parts by mass of the diene-based rubber. When a content of carbon black is less than 5 parts by mass, there is a tendency that abrasion resistance is reduced. In addition, a content of carbon black is preferably not more than 200 parts by mass, more preferably not more than 150 parts by mass based on 100 parts by mass of the diene-based rubber. When a content of carbon black is more than 200 parts by mass, there is a tendency that processibility and a low fuel consumption property are reduced.

The nitrogen adsorption specific surface area ($N_2SA$) of carbon black is preferably not less than 80 $m^2/g$, more preferably not less than 100 $m^2/g$. When the nitrogen adsorption specific surface area ($N_2SA$) is less than 80 $m^2/g$, there is a tendency that grip performance and abrasion resistance are reduced. In addition, the nitrogen adsorption specific surface area ($N_2SA$) is preferably not more than $280 m^2/g$, more preferably not more than $200 m^2/g$. When the nitrogen adsorption specific surface area ($N_2SA$) is more than $280 m^2/g$, there is a tendency that good dispersion is hardly obtained, and abrasion resistance is reduced.

It is preferable that, in addition to the forgoing, a vulcanizing agent, a vulcanization accelerator, a softening agent, a plasticizer, an antiaging agent, stearic acid, an antioxidant and an antiozonant are added to the rubber composition.

As the vulcanizing agent, an organic peroxide or a sulfur-based vulcanizing agent can be used. As the organic peroxide, for example, benzoyl peroxide, dicumyl peroxide, di-t-butyl peroxide, t-butylcumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3, 1,3-bis(t-butylperoxypropyl)benzene, di-t-butylperoxy-diisopropyl-benzene, t-butylperoxybenzene, 2,4-dichlorobenzoyl peroxide, 1,1-di-t-butylperoxy-3,3,5-trimethylsiloxane, and n-butyl-4,4-di-t-butyl peroxyvalerate can be used. Among them, dicumyl peroxide, t-butylperoxybenzene and di-t-butylperoxy-diisopropylbenzene are preferable. In addition, as the sulfur-based vulcanizing agent, for example, sulfur and morpholine disulfide can be used. Among them, sulfur is preferable.

As the vulcanization accelerator, a vulcanization accelerator containing at least one of sulfenamide-based, thiazole-based, thiuram-based, thiourea-based, guanidine-based, dithiocarbamic acid-based, aldehyde-amine-based, aldehyde-ammonia-based, imidazoline-based, and xanthate-based vulcanization accelerators can be used.

As the antiaging agent, amine-based, phenol-based, and imidazole-based compounds, a carbamic acid metal salt, and a wax can be appropriately selected and used.

Examples of the softening agent include petroleum-based softening agents such as a process oil, a lubricating oil, a paraffin, a liquid paraffin, a petroleum asphalt, and a vaseline, fatty oil-based softening agents such as a castor oil, a linseed oil, a rapeseed oil, and a palm oil, waxes such as tall oil, substitute, beeswax, carnauba wax, and lanolin, fatty acids such as linoleic acid, palmitic acid, stearic acid, and lauric acid.

Examples of the plasticizer include DMP (dimethyl phthalate), DEP (diethyl phthalate), DBP (dibutyl phthalate), DHP (diheptyl phthalate), DOP (dioctyl phthalate), DINP (diisononyl phthalate), DIDP (diisodecyl phthalate), BBP (butylbenzyl phthalate), DLP (dilauryl phthalate), DCHP (dicyclohexyl phthalate), hydrophthalic anhydride ester, DOZ (di-2-ethylhexyl azelate), DBS (dibutyl sebacate), DOS (dioctyl sebacate), acetyltriethyl citrate, acetyltributyl citrate, DBM (dibutyl maleate), DOM (2-ethylhexyl maleate), and BBF (dibutyl fumarate).

<Pneumatic tire>

The tire of the present invention is produced by a conventional method using the rubber composition of the present invention. That is, the rubber composition of the present invention into which the aforementioned various chemicals have been incorporated as necessary is extrusion-processed in conformity with a shape of each member of the tire at an unvulcanized stage, and molded on a tire molding machine by a conventional method to form an unvulcanized tire. This unvulcanized tire is heated and pressurized with a vulcanizing machine to obtain a tire. The thus obtained tire of the present invention is excellent in the balance between grip performance and abrasion resistance, and is preferably used, particularly, as a tread of a winter tire among tire members.

Fig. 1 shows a right half of a cross section of the pneumatic tire of the present invention. A tire 1 is provided with a tread part 7, one pair of side wall parts 8 which extend inwardly in a tire radial direction from both ends thereof, a bead part 3 which is situated at an inner end of each side wall part and a chafer 2 which is situated at an upper part of a rim. A carcass 10 is hanged between bead parts 3 on both sides and, at the same time, a braker part 9 is arranged outwardly in a tire radial direction of this carcass 10. Carcass 10 is formed of one or more carcass plie(s) on which carcass cords are disposed, and this carcass ply is engaged by being folded back from an inner side to an outer side in a tire axial direction around a bead core 4, and a bead apex 5 which extends in a side wall direction from an upper end of bead core 4, via a tread part to a side wall part. Braker part 9 consists of two or more braker plies on which braker cords are disposed, and respective braker cords are disposed in different directions so as to cross between braker plies. On an upper side of the braker part, a band 6 is disposed in order to alleviate lifting on both sides of the braker at tire running. In the present invention, the rubber composition for a tire is used in tread part 7. Fig. 1 illustrates a tire for a passenger car, but the present invention can be also applied to a truck bus tire, a tire for a light truck and the like.

Examples

The present invention will be described in detail based on Examples, but the present invention is not limited to them.

<Synthesis of aromatic vinyl polymers (1) to (4)>

(Synthesis of aromatic vinyl polymer (1))

To a 100 ml container which had been sufficiently replaced with nitrogen, were added 35 ml of cyclohexane, 0.5 ml of tetrahydrofuran, 2.5 ml of styrene and 2.7 ml of a 1.6 mol/l solution of n-butyllithium in hexane, this was stirred at room temperature for 1 hour, and isopropanol was added to stop the reaction, thereby, an aromatic vinyl polymer (1) was synthesized. Chemicals used herein are all manufactured by Tokyo Kasei Kogyo Co., Ltd.

(Synthesis of aromatic vinyl polymer (2))

According to the same condition as that of synthesis of aromatic vinyl polymer (1) except that an amount of styrene was changed from 2.5 ml to 5 ml, an aromatic vinyl polymer (2) was synthesized.

(Synthesis of aromatic vinyl polymer (3))

According to the same condition as that of synthesis of aromatic vinyl polymer (1) except that 2.9 ml of $\alpha$-methylstyrene in place of styrene was added, an aromatic vinyl polymer (3) was synthesized.

(Synthesis of aromatic vinyl polymer (4))

According to the same condition as that of synthesis of aromatic vinyl polymer (2) except that 0.27 ml in place of 2.7 ml of a 1.6 mol/l solution of n-butyllithium in hexane was added, an aromatic vinyl polymer (4) was synthesized.
Monomer components and weight average molecular weights of the resulting aromatic vinyl polymers (1) to (4) are shown below. A weight average molecular weight (Mw) was measured using an apparatus of GPC-8000 series manufactured by

Tosoh Corporation and using a differential refractometer as a detector, and a molecular weight was measured by calibration with standard polystyrene.
Aromatic vinyl polymer (1) (monomer component: styrene, weight average molecular weight (Mw) = 480)
Aromatic vinyl polymer (2) (monomer component: styrene, weight average molecular weight (Mw) = 1020)
Aromatic vinyl polymer (3) (monomer component: $\alpha$-methylstyrene, weight average molecular weight (Mw) = 520)
Aromatic vinyl polymer (4) (monomer component: styrene, weight average molecular weight (Mw) = 10700)

Examples 1 to 5 and Comparative Examples 1 to 5

Chemicals other than sulfur and a vulcanization accelerator were added in incorporation amounts shown in Tables 1 and 2, and kneaded at 150°C for 5 minutes using a Banbury mixer. Thereafter, to the resulting kneaded mixture were added sulfur and a vulcanization accelerator in incorporation amounts shown in Tables 1 and 2, and this was kneaded at 50°C for 5 hours using a biaxial open roll to obtain an unvulcanized rubber composition. Further, the resulting unvulcanized rubber composition was press-vulcanized for 15 minutes under the condition of 170°C to obtain vulcanized rubber compositions of Examples and Comparative Examples.

Each of the unvulcanized rubber compositions was extrusion-molded into a tread shape, molded with other tire members, and press-vulcanized at 170°C for 10 minutes to prepare a tire (size 195/65R15) having a structure shown in Fig. 1. A fundamental structure of a sample tire is as follows:

Carcass ply

Cord angle 90 degrees in tire circumferential direction
Cord material polyester 1100dtex/2

Braker

Cord angle 25 degrees x 25 degrees in tire circumferential direction
Cord material steel cord (1 x 5)

Chemicals used in Examples and Comparative Examples of the present invention are summarized below.

Table 1

| | | | Comparative Example 1 | Example 1 | Example 2 | Example 3 | Example 4 | Example 5* | Comparative Example 2 | Comparative Example 3 |
|---|---|---|---|---|---|---|---|---|---|---|
| Formulation | NR | (Note 1) | 75 | 75 | 75 | 75 | 75 | 75 | 100 | - |
| | BR1 | (Note 2) | 25 | 25 | 25 | 25 | 25 | 25 | - | 25 |
| | BR2 | (Note 2) | - | - | - | - | - | - | - | - |
| | SBR | (Note 3) | - | - | - | - | - | - | - | 75 |
| | Carbon black | (Note 4) | 30 | 30 | 30 | 30 | 30 | 30 | 30 | 30 |
| | Silica | (Note 5) | 20 | 20 | 20 | 20 | 20 | 20 | 20 | 20 |
| | Silane coupling agent | (Note 6) | 2 | 2 | 2 | 2 | 2 | 2 | 2 | 2 |
| | Oil | (Note 7) | 25 | 20 | - | - | - | 20 | 20 | 20 |
| | Aromatic vinyl polymer (1) | (Note 8) | - | 5 | 25 | - | - | - | 5 | 5 |
| | Aromatic vinyl polymer (2) | (Note 9) (Note 9) | - | - | - | 25 | - | - | - | - |
| | Aromatic vinyl polymer (3) | (Note 10) | - | - | - | - | 25 | - | - | - |
| | Aromatic vinyl polymer (4) | (Note 11) | - | - | - | - | - | 5 | - | - |
| | Wax | (Note 12) | 1 | 1 | 1 | 1 | 1 | 1 | 1 | 1 |
| | Antiaging agent | (Note 13) | 1 | 1 | 1 | 1 | 1 | 1 | 1 | 1 |
| | Stearic acid | (Note 14) | 2 | 2 | 2 | 2 | 2 | 2 | 2 | 2 |
| | Zinc oxide | (Note 13) | 2 | 2 | 2 | 2 | 2 | 2 | 2 | 2 |
| | Sulfur | (Note 16) | 1 | 1 | 1 | 1 | 1 | 1 | 1 | 1 |
| | Vulcanization accelerator (1) | (Note 17) | 1.5 | 1.5 | 1.5 | 1.5 | 1.5 | 1.5 | 1.5 | 1.5 |
| | Vulcanization accelerator (2) | (Note 18) | 1 | 1 | 1 | 1 | 1 | 1 | 1 | 1 |

(continued)

| | | Comparative Example 1 | Example 1 | Example 2 | Example 3 | Example 4 | Example 5* | Comparative Example 2 | Comparative Example 3 |
|---|---|---|---|---|---|---|---|---|---|
| Properties | Grip performance (1) | 100 | 105 | 115 | 107 | 113 | 100 | 98 | 95 |
| | Grip performance (2) | 100 | 103 | 112 | 104 | 109 | 100 | 101 | 96 |
| | Abrasion resistance | 100 | 103 | 109 | 112 | 106 | 103 | 108 | 96 |
| * not according to the invention | | | | | | | | | |

Table 2

| | | | Comparative Example 4 | Example 6 | Comparative Example 5 |
|---|---|---|---|---|---|
| Formulation | NR | (Note 1) | 90 | 90 | - |
| | BR1 | (Note 2) | - | - | - |
| | BR2 | (Note 2) | 10 | 10 | 10 |
| | SBR | (Note 3) | - | - | 90 |
| | Carbon black | (Note 4) | 30 | 30 | 30 |
| | Silica | (Note 5) | 20 | 20 | 20 |
| | Silane coupling agent | (Note 6) | 2 | 2 | 2 |
| | Oil | (Note 7) | 25 | 20 | 20 |
| | Aromatic vinyl polymer (1) | (Note 8) | - | 5 | 5 |
| | Wax | (Note 12) | 1 | 1 | 1 |
| | Antiaging agent | (Note 13) | 1 | 1 | 1 |
| | Stearic acid | (Note 14) | 2 | 2 | 2 |
| | Zinc oxide | (Note 15) | 2 | 2 | 2 |
| | Sulfur | (Note 16) | 1 | 1 | 1 |
| | Vulcanization accelerator (1) | (Note 17) | 1.5 | 1.5 | 1.5 |
| | Vulcanization accelerator (2) | (Note 18) | 1 | 1 | 1 |

(continued)

|  |  | Comparative Example 4 | Example 6 | Comparative Example 5 |
|---|---|---|---|---|
| Properties | Grip performance (1) | 100 | 101 | 95 |
|  | Grip performance (2) | 100 | 99 | 93 |
|  | Abrasion resistance | 100 | 101 | 97 |

(Note 1) Natural rubber: RSS#3 manufactured by Tech Beehang (Note 2) BR1: Ubepol BR150B manufactured by UBE INDUSTRIES, LTD (CIS content: 96%) BR2: Nipol BR1242 manufactured by Nippon Zeon Co., Ltd. (CIS content: 36%) (Note 3) SBR: Nipol NS116 manufactured by Nippon Zeon Co., Ltd.

(Note 4) Carbon black: Show Black N220 manufactured by CABOT Japan K. K. (nitrogen adsorption specific surface area ($N_2SA$): 125m$^2$/g)

(Note 5) Silica: Ultrasil VN3 manufactured by Degussa ($N_2SA$: 210 m$^2$/m)

(Note 6) Silane coupling agent: Si69 (bis(3-triethoxysilylpropyl)tetrasulfide) manufactured by Degussa (Note 7) Oil: Dyna Process oil PS323 manufactured by Idemitsu Kosan Co., Ltd.

(Note 8) Aromatic vinyl polymer (1): Polymer obtained by the above polymerization method (monomer: styrene, Mw = 480) (Note 9) Aromatic vinyl polymer (2): Polymer obtained by the above polymerization method (monomer: styrene, Mw = 1020) (Note 10) Aromatic vinyl polymer (3): Polymer obtained by the above polymerization method (monomer: α-methylstyrene, Mw = 520) (Note 11) Aromatic vinyl polymer (4): Polymer obtained by the above polymerization method (monomer: styrene, Mw = 10700) (Note 12) Wax: Sunnoc wax manufactured by OUCHI SHINKO CHEMICAL INDUSTRIAL CO., LTD.

(Note 13) Antiaging agent: Nocrac 6C (N-1,3-dimethybutyl-N'-phenyl-p-phenylenediamine) manufactured by OUCHI SHINKO CHEMICAL INDUSTRIAL CO., LTD.

(Note 14) Stearic acid: manufactured by Nippon Oil & Fats Co., Ltd.

(Note 15) Zinc oxide: Zinc flower No. 1 manufactured by MITSUI MINING & SMELTING CO., LTD.

(Note 16) Sulfur: powdery sulfur manufactured by Tsurumi Chemical Industry Co., Ltd.

(Note 17) Vulcanization accelerator (1): Nocceller CZ (N-t-butyl-2-benzothiazolylsulfenamide) manufactured by OUCHI SHINKO CHEMICAL INDUSTRIAL CO., LTD.

(Note 18) Vulcanization accelerator (2): Nocceller D (N, N'-diphenylguanidine) manufactured by OUCHI SHINKO CHEMICAL INDUSTRIAL CO., LTD.

Assessment of properties of the vulcanized rubbers and the sample tires was performed by the following methods.

<Grip performance (1)>

A rubber test piece was pushed at a constant load against a surface of an ice disposed in a temperature-controlled constant temperature chamber, and a friction force at a constant rate gliding was detected. The test condition was an ice temperature and a constant temperature chamber temperature of -5°C, a rate of 20 km/h, and a load of a set pressure 2 kg/cm$^2$. In assessment, the result was expressed as an index letting Comparative Example 1 to be 100. A greater numerical value indicates that the test piece is more excellent in grip performance.

<Grip performance (2)>

The sample tire was mounted on a domestic FR having a discharge gas amount of 2000 cc, the FR was braked at a rate of 30 km/h under an air temperature of -1°C to -6°C, a road surface running distance (braking distance) on an ice from braking to stopping was measured, and a reciprocal value of the distance was obtained. Letting Comparative Example 1 to be 100, Examples 1 to 5 and Comparative Examples 2 and 3 are indicated as relative values. Letting Comparative Example 4 to be 100, Example 6 and Comparative Example 5 are indicated as relative values. A greater numerical value indicates that the tire is more excellent in grip property.

<Abrasion resistance>

The sample tire was mounted on the domestic FR, the FR ran on the road surface by 20 circles, a change in a depth of a groove before and after running was measured, and each abrasion resistance index was calculated by the following equation using a depth of Comparative Example 1 as a standard. A greater numerical value of the abrasion resistance index indicates that the tire is better in abrasion resistance.

$$\text{(Abrasion resistance index)} = \text{(change in depth of groove of Comparative Example 1)}/\text{(change in depth of groove of each Example)} \times 100$$

From Tables 1 and 2, it is recognized that, in Examples 1 to 6 with aromatic vinyl polymers (1) to (4) incorporated therein, grip performance and abrasion resistance are improved in all cases.

Embodiments and Examples disclosed at this time are illustrative in all respects, and should not be construed to be limiting.

According to the present invention, by incorporating predetermined amounts of silica and an aromatic polyvinyl polymer into a rubber component of a natural rubber and polybutadiene, grip performance on an ice snow road surface is improved while maintaining abrasion resistance. The present invention can be applied to not only a tire for a passenger car but also tires of various categories such as a truck bus tire, a tire for a light truck.

Although the present invention has been described and illustrated in detail, it is clearly understood that the same is by way of illustration and example only and is not to be taken by way of limitation.

## Claims

1.  A rubber composition for a tire comprising 2 to 150 parts by mass of an aromatic vinyl polymer and 5 to 200 parts by mass of silica based on 100 parts by mass of a diene-based rubber component, wherein the diene-based rubber component contains not less than 20% by mass of a natural rubber and further, not less than 5% by mass of polybutadiene, wherein the aromatic vinyl polymer does not include a copolymer with a monomer other than an aromatic vinyl monomer, and wherein the weight average molecular weight of said aromatic vinyl polymer is 300 to 8000.

2.  The rubber composition for a tire according to claim 1, wherein the cis content of said polybutadiene is not less than 93%.

3.  The rubber composition for a tire according to claim 1, wherein the weight average molecular weight of said aromatic vinyl polymer is 300 to 2000.

4.  The rubber composition for a tire according to claim 1, wherein the monomer component of the aromatic vinyl polymer is styrene or $\alpha$-methylstyrene.

5.  A winter tire using the rubber composition according to claim 1 in a tread part.

## Patentansprüche

1.  Kautschukzusammensetzung für einen Reifen enthaltend 2 bis 150 Massenteile eines aromatischen Vinylpolymers und 5 bis 200 Massenteile Silica bezogen auf 100 Massenteile einer auf Dien basierenden Kautschukkomponente, wobei die auf Dien basierende Kautschukkomponente nicht weniger als 20 Massen-% eines Naturkautschuks und ferner nicht weniger als 5 Massen-% Polybutadien enthält, wobei das aromatische Vinylpolymer nicht ein Copolymer mit einem Monomer verschieden von einem aromatischen Vinylmonomer enthält, und, wobei das gewichtsgemittelte Molekulargewicht des aromatischen Vinylpolymers 300 bis 8.000 beträgt.

2.  Kautschukzusammensetzung für einen Reifen nach Anspruch 1, wobei der cis-Gehalt des Polybutadiens nicht weniger als 93 % beträgt.

3.  Kautschukzusammensetzung für einen Reifen nach Anspruch 1, wobei das gewichtsgemittelte Molekulargewicht des aromatischen Vinylpolymers 300 bis 2.000 beträgt.

4.  Kautschukzusammensetzung für einen Reifen nach Anspruch 1, wobei die Monomerkomponente des aromatischen Vinylpolymers Styrol oder $\alpha$-Methylstyrol ist.

5.  Winterreifen unter Verwendung einer Kautschukzusammensetzung nach Anspruch 1 in einem Laufflächenteil.

**Revendications**

1.  Composition de caoutchouc pour un pneu comprenant de 2 à 150 parties en masse d'un polymère vinylique aromatique et de 5 à 200 parties en masse de silice rapportées à 100 parties en masse d'un constituant de caoutchouc à base de diène, dans laquelle le constituant de caoutchouc à base de diène ne contient pas moins de 20 % en masse d'un caoutchouc naturel et, de plus, pas moins de 5 % en masse de polybutadiène, dans laquelle le polymère vinylique aromatique ne comprend pas un copolymère avec un monomère différent d'un monomère vinylique aromatique, et dans laquelle la masse moléculaire moyenne en masse dudit polymère vinylique aromatique est de 300 à 8 000.

2.  Composition de caoutchouc pour un pneu selon la revendication 1, dans laquelle la teneur cis dudit polybutadiène n'est pas inférieure à 93%.

3.  Composition de caoutchouc pour un pneu selon la revendication 1, dans laquelle la masse moléculaire moyenne en masse dudit polymère vinylique aromatique est de 300 à 2 000.

4.  Composition de caoutchouc pour un pneu selon la revendication 1, dans laquelle le constituant monomère du polymère vinylique aromatique est le styrène ou l'$\alpha$-méthylstyrène.

5.  Pneu d'hiver utilisant la composition de caoutchouc selon la revendication 1 dans une partie de bande de roulement.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007165408 A
- JP 2005154696 A
- JP 2007112994 A
- KR 1020050001112 A
- EP 1770122 A2
- EP 1647572 A1
- EP 1535959 A2